# EUROPEAN PATENT APPLICATION

(11) **EP 2 105 830 A2**
(43) Date of publication of application: **30.09.2009**
(21) Application number: 08253961.0
(22) Date of filing: 10.12.2008
(51) Int. Cl.: G06F 3/06

(54) **Storage apparatus and control method for same**

(30) Priority: 25.03.2008 JP 2008078057
(71) Applicant: Hitachi, Ltd., Chiyoda-ku Tokyo (JP)
(72) Inventor: Kobayashi, Ikuko, Chiyoda-ku Tokyo 100-8220 (JP); Kimura, Shinji, Chiyoda-ku Tokyo 100-8220 (JP); Yamamoto, Akira, Chiyoda-ku Tokyo 100-8220 (JP)
(74) Representative: Moore, Graeme Patrick

(57) **Abstract**

The storage apparatus includes an external logical unit as a target of a plurality of host apparatuses, and an internal logical unit assigned to the external logical unit. The internal logical unit includes a common logical unit having common files commonly used by the plurality of host apparatuses, and an individual logical unit having individual files used by each of the plurality of host apparatuses. Upon receipt of a write request from the host apparatus, the storage apparatus performs data matching by comparing write data depending on the write request with data stored in the common logical unit at a management block unit. The storage apparatus stores matching data block in the common logical unit, and stores a non-matching data block in an individual logical block.

## Description

### Cross-references to Related Applications

This application relates to and claims priority from Japanese Patent Application No. 2008-078057, filed on March 25, 2008, the entire disclosure of which is incorporated herein by reference.

The present invention relates generally to a storage apparatus, and particularly to a storage apparatus operatively connected to a plurality of host apparatuses (e.g., computer) over a network and a control method for the storage apparatus.

Recently, in order to easily perform data management on a system, a computer system has been proposed, which manages data processed by a plurality of computers intensively in a shared data storage apparatus over a network, instead of using a local storage in each computer. For example, a diskless computer system and a virtual computer system are well known.

A diskless computer system is a computer system that does not have a built-in disk drive (or have, but disabling it). In the diskless computer systems, an OS image (boot image) is stored in a logical unit in the storage apparatus over the SAN. The computer can be booted up from the logical unit by mounting the logical unit through the SAN. Since the data processed by the OS used in each computer and application programs executed on the OS is stored in a storage area assigned to each computer, the system administrator may comprehensively manage the data in the storage apparatus.

The virtual computer system integrates a plurality of computer environments into a server computer using a so-called virtualization mechanism. Since the virtual computer implemented on the server computer stores an OS, application programs, and data in a virtual disk created in a logical unit in the storage apparatus, the system administrator may also comprehensively manage the data in the storage apparatus.

Generally, in such computer systems, each computer uses a shared boot image, and also requires a storage area assigned to each computer. Considering this, the Patent Document 1 set forth below discloses a storage apparatus for creating a logical unit for storing data depending on each computer and a logical unit for storing software shared by the computers, and providing each computer with a storage area virtually created by combining these logical units based on usage of the software in each computer. Thus, since the software used by the computers is stored in a shared logical unit, storage usage for the storage area occupied by the software can be reduced as the whole storage apparatus.

[Patent Document 1]
Japanese Patent Application Laid-open No. 2005-301708

In the above-mentioned conventional computer system, in a case where any of resources such as an OS and application program in each computer is updated, the updated portion is stored in an individual storage area assigned to each computer. Therefore, if the updates are frequently repeated, each computer uses the individual storage area without referring to a shared logical unit. As a consequence, as the area is continuously used, the individual storage area assigned to each computer in the storage apparatus expands, and the reduction effect of the storage usage decreases, thereby increasing the storage capacity cost of the storage apparatus.

The present invention aims at providing a storage apparatus and a method for controlling the storage apparatus capable of efficiently using a logical unit used by each host apparatus (computer), thereby restraining the increase of a storage capacity cost.

To try to solve the above-mentioned problem, the present invention according to one aspect preferably provides a computer system including a plurality of host apparatuses configured to be operatively connected to a network; a storage apparatus configured to be operatively connected to the network; and a master management apparatus configured to be operatively connected to the network.

The storage apparatus preferably includes an external logical unit at which each of the plurality of host apparatuses is targeted and an internal logical unit assigned to the external logical unit. The internal logical unit preferably includes a common logical unit for storing data configuring common files commonly used by the plurality of host apparatuses and an individual logical unit for storing data configuring individual files used by each of the plurality of host apparatuses.

The storage apparatus preferably performs, at a write request from at least one of the plurality of host apparatuses, data matching by comparing write data depending on the write request with data stored in the common logical unit at each management block unit, as a result of the data matching, stores a matching data block in the common logical unit, and stores a non-matching data block in the individual logical block.

The present invention according to one aspect aims to provide a method of controlling a storage apparatus connected to a plurality of host apparatuses over a network.

The control method preferably includes creating, as a common logical unit, an internal logical unit storing data configuring common files commonly used by a plurality of host apparatuses, creating, as a individual logical unit, an internal logical unit for storing data configuring an individual file used by each of the plurality of host apparatuses, assigning the common logical unit and the individual logical unit to an external logical unit as a target of each of the plurality of host apparatuses, receiving a write request from at least one of the plurality of host apparatuses, performing data matching by comparing write data depending on the write request with the data stored in the common logical unit at each management block unit, and storing a matching data block in the common logical unit and storing a non-matching data block in the individual logical block.

According to the present invention, since storing of redundant data is avoided, the logical unit in the storage apparatus used by each host apparatus can efficiently be used, thereby restraining the increase of a storage capacity cost.

Other aspects and advantages of the invention will be apparent from the following description and the appended claims.

### Brief Description of the Drawings

FIG. 1 shows a schematic configuration illustrating a computer system according to an embodiment of the present invention;
FIG. 2 shows an internal configuration of a host apparatus according to an embodiment of the present invention;
FIG. 3 shows an internal configuration of the storage apparatus according to an embodiment of the present invention;
FIG. 4 shows an the internal configuration of the master management apparatus according to an embodiment of the present invention;
FIG. 5 is a conceptual diagram of a configuration of the logical unit in the storage apparatus according to an embodiment of the present invention;
FIG. 6 shows an exemplary target management table in a storage apparatus according to an embodiment of the present invention;
FIG. 7 shows an exemplary external logical unit management table in a storage apparatus according to an embodiment of the present invention;
FIG. 8 shows an exemplary common logical unit management table in a storage apparatus according to an embodiment of the present invention;
FIG. 9 shows an exemplary external logical unit block mapping table in a storage apparatus according to an embodiment of the present invention;
FIG. 10 shows an exemplary image management table in a storage apparatus according to an embodiment of the present invention;
FIG. 11 shows an exemplary internal logical unit block management table in a storage apparatus according to an embodiment of the present invention;
FIG. 12 shows an exemplary common logical unit data management table in a storage apparatus according to an embodiment of the present invention;
FIG. 13 is a flowchart for explaining a master generating process in the master management apparatus according to an embodiment of the present invention;
FIG. 14 is a flowchart for explaining common logical unit generating processing in the storage apparatus according to an embodiment of the present invention;
FIG. 15 is a flowchart for explaining master write processing in the storage apparatus according to an embodiment of the present invention;
FIG. 16 is a flowchart for explaining boot image creating processing in the master management apparatus according to an embodiment of the present invention;
FIG. 17 is a flowchart for explanation of individual logical unit creating processing in a storage apparatus according to an embodiment of the present invention;
FIG. 18 is a flowchart for explaining individual write processing when a boot image is created in a storage apparatus according to an embodiment of the present invention;
FIG. 19 is a flowchart for explaining first individual write processing in a storage apparatus according to an embodiment of the present invention;
FIG. 20 is a flowchart for explaining second individual write creating processing in a storage apparatus according to an embodiment of the present invention;
FIG. 21 is a flowchart for explaining read processing in a storage apparatus according to an embodiment of the present invention;
FIG. 22 is a flowchart for explaining data move processing in a storage apparatus according to an embodiment of the present invention; and
FIG. 23 is a flowchart for explaining second individual write processing in a storage apparatus according to an embodiment of the present invention.

### Detailed Description

Embodiments of the present invention are described below with reference to the attached drawings.

### (1) System Configuration

### (1-1) Configuration of a computer system

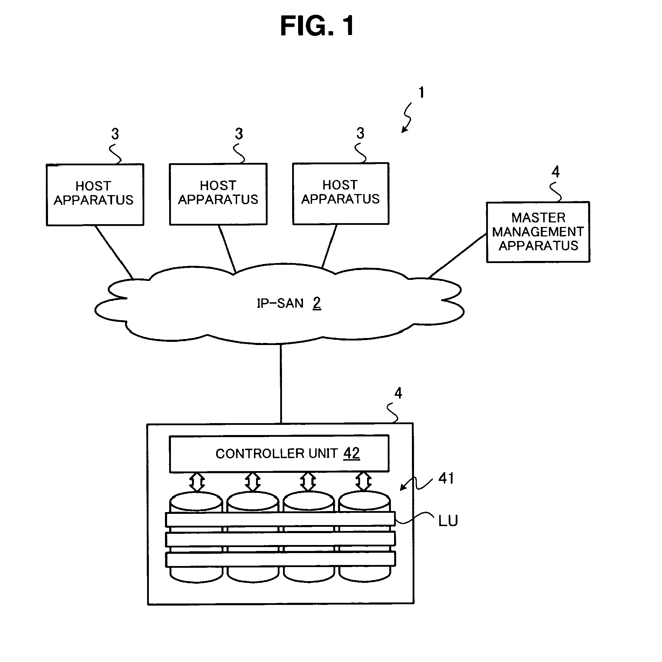

FIG. 1 shows a schematic configuration of a computer system according to an embodiment of the present invention. As shown in FIG. 1, a computer system 1 includes a plurality of host apparatus 100, a master management apparatus 200, and a storage apparatus 300, which are interconnected with each other via a network 2.

The network 2 may be a LAN or SAN for storage access, and typically configured by including a switch and a hub (not shown). A fiber channel protocol (FCP) or an Internet protocol (IP) may be applied to the network 2. In this embodiment, it is assumed that the network 2 is an IP-LAN configured by Ethernet (registered trademark), and an iSCSI is used as an upper layer protocol.

A host apparatus 3 is a computer for performing a desired process, and typically may be a server computer for performing processing requested from a client computer (not shown). The host apparatus 3 executes various programs and realizes processing in response to a request from the client computer. For example, the host apparatus 3 executes an application program, performing I/O accesses to the storage apparatus 4, thereby realizing a desired application system.

A storage apparatus 4 provides a data storage service for the host apparatus 3. The storage apparatus 4 includes a plurality of drive units 41 as physical devices, and a controller unit 42 configured to control I/O access to a logical unit formed on the drive unit 41 in response to an I/O request from the host apparatus 3.

The master management apparatus 5 accesses and manages the host apparatus 3 and the storage apparatus 4 via the network 2. For example, the master management apparatus 5 performs control of creating a logical unit (common logical unit) for storing common files used by a plurality of host apparatuses 3 on the drive unit 41 of the storage apparatus 4.

### (1-2) Configuration of a host apparatus

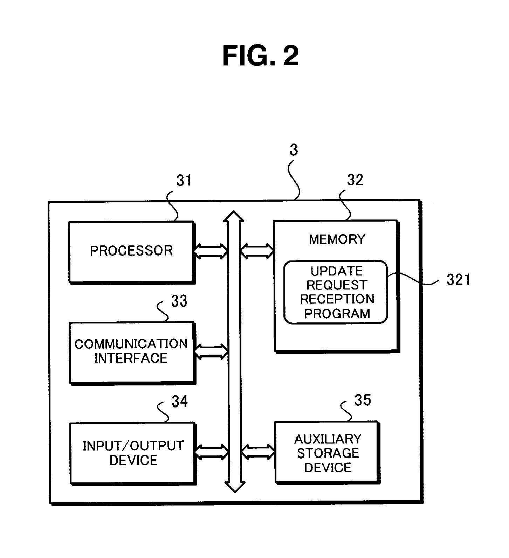

FIG. 2 schematically shows an internal configuration of the host apparatus 3 according to an embodiment of the present invention. As shown in FIG. 2, the host apparatus 3 typically includes hardware resources such as a processor 31, main memory 32, a communication interface 33, an input/output device 34, an auxiliary storage apparatus (local storage) 35, etc. and software resources such as a device driver, an operating system (OS), an application program stored in the auxiliary storage apparatus 35, etc. (not shown). Thus, the host apparatus 3 executes various programs loaded in the main memory 32 from the auxiliary storage apparatus 35 under the control of a processor in cooperation with various hardware resources, and realizes processing in response to a request from a client computer. According to this embodiment, in the host apparatus 3, an update request reception program 321 is installed and expanded as an executable object in the main memory 32 as well as the above-mentioned OS and application program.

### (1-3) Configuration of a storage apparatus

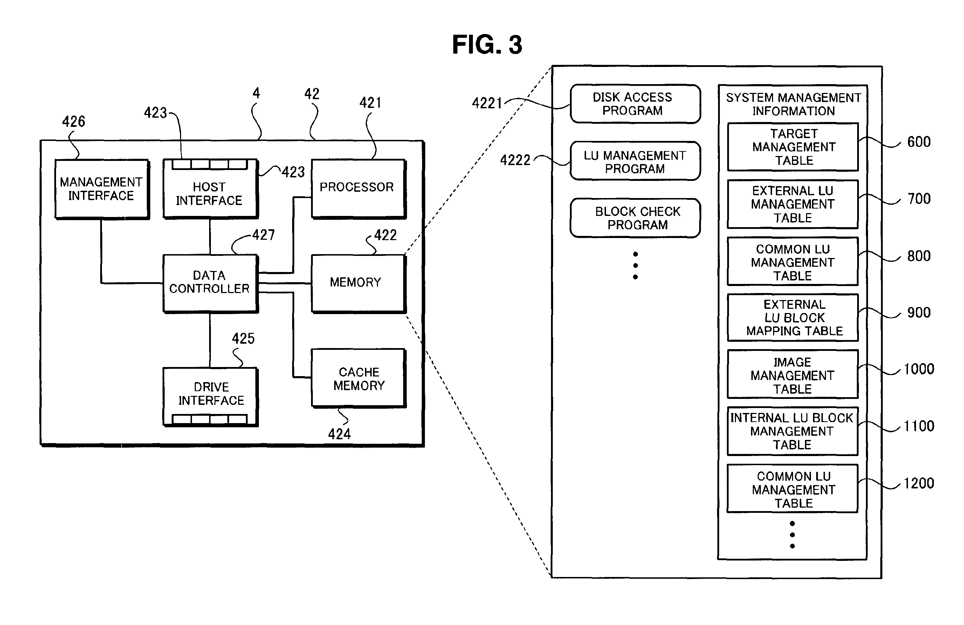

FIG. 3 schematically shows an internal configuration of the storage apparatus 4 according to an embodiment of the present invention. As described above, the storage apparatus 4 is provided with a plurality of drive units 41, which is physical devices, and a controller unit 42 configured to control I/O access to the logical unit formed on the drive unit 41 in response to an I/O request from the host apparatus 3. Although not shown in FIG. 3, the storage apparatus 4 may have a redundant configuration (e.g., example, a duplex configuration) of the controller unit 42, and may correspondingly have a redundant path for the hard disk drive in the drive unit 41.

The drive unit 41 is a plurality of physical devices (PDEV) configured by including storage media such as a plurality of hard disk drives (HDD), solid state drive (SSD). The drive unit 41 may also be referred to as an array device. On the drive unit 41, some physical devices are grouped as a virtual device (VDEV) virtually congregated into one device under the RAID control of the controller unit 42, and as a consequence of this one or more logical devices (LDEV) are formed on the virtual device.

A logical device is a logical storage apparatus that can be recognized by the host apparatus 3, and assigned a logical unit (LU) in this embodiment. That is, each logical device is assigned to each port 5231 of a controller unit 52, thereby allowing the host apparatus 3 to recognize the logical device formed on the physical device as a logical unit.

Each logical unit is assigned a logical unit number (LUN). A logical unit is divided into blocks in the minimum unit of I/O access. Each block is assigned a logical block address (LBA). The host apparatus 3 can access a specific block in a specific logical unit by issuing a command including a logical address having a logical unit number and a logical block address to the storage apparatus 4.

As described above, according to this embodiment using the iSCSI, each of the host apparatus 3 and the storage apparatus 4 serves as an initiator and a target respectively, each of which is an iSCSI node assigned an iSCSI name. Therefore, the host apparatus 3 and the storage apparatus 4 transmit and receive an iSCSI PDU through a network portal specified by a combination of an IP address and a TCP port number. Accordingly, the host apparatus 3 specifies an iSCSI name, an IP address, and a TCP port number, thereby recognizing the storage apparatus 5 on the network 2 and accesses a block in the logical unit.

In addition, one or more virtual logical volumes are set on a logical device (i.e., a logical unit) recognized by the host apparatus 3. The logical volume is a virtual partition on a logical device. A logical device (or a logical unit) can be distinguished from a logical volume depending on a system environment, etc. to which the storage apparatus 4 is applied, but they could be regarded as the same or equivalent devices in this embodiment.

The controller unit 42 is provided with, among others, a processor 421, memory 422, a host interface 423, cache memory 424, a drive interface 425, and a management interface 426. They are interconnected with each other in a bus connection through a data controller 427.

As shown in Fig. 3, the processor 421 comprehensively controls the controller unit 42 by executing various control programs held in the memory 422. The memory 422 holds system configuration information including various tables in addition to control programs like a disk access program 4221, a logical unit management program 4222, a block check program. In this embodiment, a target management table 600, an external logical unit (external LU) management table 700, a common logical unit (common LU) management table 800, an external logical unit (external LU) block mapping table 900, an image management table 1000, an internal logical unit (internal LU) block management table 1100, and a common logical unit (common LU) management table 1200 are provided. These programs and tables are read from a predetermined storage area in a hard device drive according to the initial sequence activated at turn-on, for example, and loaded to the memory 422.

The host interface 423 is provided with a plurality of ports 4231 being a network interface for communications with the host apparatus 3 connected to the ports 4231 via the network 2. The host interface 423 can be implemented with an iSCSI protocol in addition to the TCP/IP protocol to reduce the load on the processor 421. The host interface 423 can also be referred to as a host bus adapter.

The cache memory 424 temporarily stores (caches) application data exchanged between the host interface 423 and the device interface 425 to provide the host apparatus 3 with a high response characteristic. The cache memory 424 is typically configured by volatile memory such as DRAM, but all or a part of the memory can be configured by non-volatile memory such as flash memory.

The device interface 425 is provided with a plurality of ports, and controls I/O access to the drive unit 41 connected to the port through a disc channel. Specifically, the device interface 425 retrieves data cached in the cache memory 424, stores the data in a corresponding block in the drive unit 41 (destaging), reads the data from the block in the drive unit 41, and writes the data to the cache memory 424 (staging). For example, if a read request is received from the host apparatus 3, and the requested data is not in the cache memory 424, then the destaging is performed as necessary reserve a cache area, and the requested data is staged in the cache memory 424.

The management interface 426 is provided with a managing port, and is a network interface which communicates with the master management apparatus 4 connected to the managing port over the network 2. In this embodiment, the TCP/IP based communication is performed. Therefore, an Ethernet (registered trademark) board may be used.

The data controller 427 interconnects the processor 421, memory 422, host interface 423, cache memory 424, and device interface 425, and is a chip set which controls the flow of the data among them.

### (1-4) Configuration of a master management apparatus

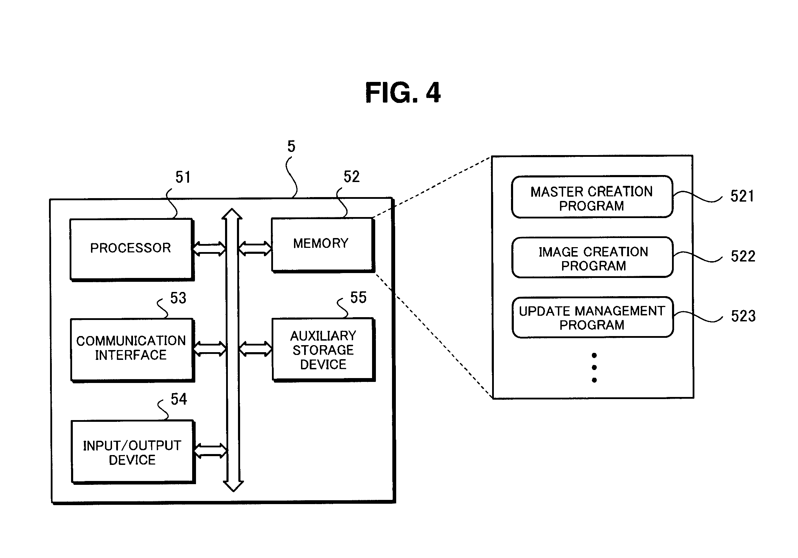

FIG. 4 schematically shows an internal configuration of the master management apparatus 4 according to an embodiment of the present invention. As described above, since the master management apparatus 4 may also be a computer, it fundamentally has the same internal configuration as the host apparatus. The master management apparatus 4 is implemented with a master creation program 521, an image creation program 522, and au update management program 523 to manage the storage apparatus 3. The communication interface 33 is connected to the host apparatus 3 and the storage apparatus 4 over the network 2.

### (1-5) Conceptual configuration of a logical unit

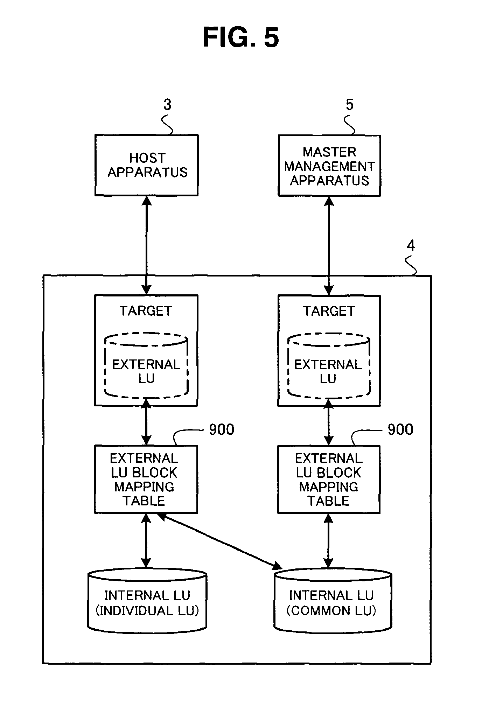

FIG. 5 is a conceptual diagram of a configuration of the logical unit in the storage apparatus 4 according to an embodiment of the present invention.

As described above, the host apparatus 3 as an initiator in the iSCSI is connected to the storage apparatus 4 as a target using target information. The target information is an iSCSI name (target ID) identifying the iSCSI node, and an IP address and a TCP port number identifying the network portal. An initiator name can be used as target information. One or more logical units may be assigned to one target.

In this embodiment, the storage apparatus 4 forms a virtual logical unit identified by target information. Specifically, the host apparatus 3 recognizes the virtual logical unit in the storage apparatus 4 according to the target information. In this embodiment, the virtual logical unit is referred to as an external logical unit ("external LU"). A logical unit assigned an actual storage area in the drive unit 41 as a physical device in the storage apparatus 4 is referred to as an internal logical unit ("internal LU").

The internal logical unit includes a common logical unit ("common LU") for storing block data common to each host apparatus 3, and an individual logical unit ("individual LU") for storing block data peculiar to each host apparatus.

These logical units are managed and referred to by various management tables described below.

### (2) Configurations of various management tables

### (2-1) Configuration of target management table

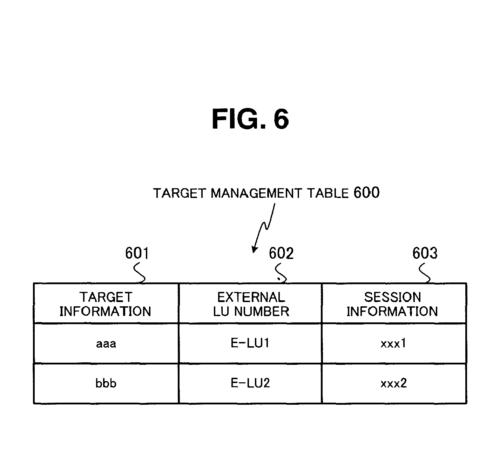

FIG. 6 shows an example of the target management table 600 of the storage apparatus 4 according to an embodiment of the present invention. The target management table 600 associates a target recognized by the host apparatus 3 with a virtual external logical unit.

As shown in FIG. 6, the target management table 600 includes a target information column 601, an external logical unit number column 602, and a session information column 603.

The target information column 601 holds target information for uniquely identifying a target. The target information is, for example, an iSCSI name. The external logical unit number column 602 holds a number for uniquely identifying an external logical unit (external logical unit number). The session information column 603 holds information for uniquely identifying the host apparatus 3 that establishes a session for a target.

### (2-2) Configuration of an external logical unit management table

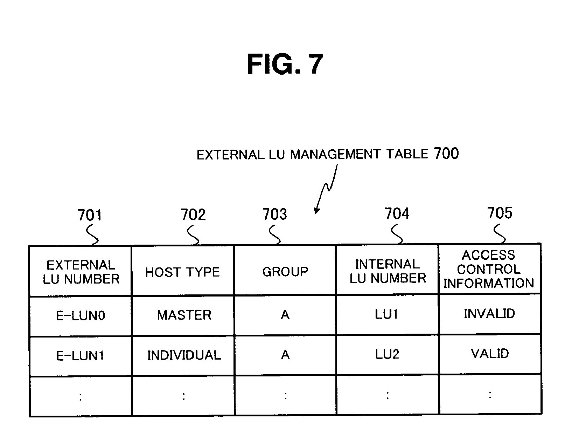

FIG. 7 shows an example of the external logical unit management table 700 of the storage apparatus 4 according to an embodiment of the present invention. The external logical unit management table 700 associates an external logical unit with an internal logical unit, and also manages various types of information about the external logical unit.

As shown in FIG. 7, the external logical unit management table 700 includes an external logical unit number column 701, a host type column 702, a group column 703, an internal logical unit number column 704, and an access control information column 705.

The external logical unit number column 701 holds an external logical unit number. Thus, the external logical unit management table 700 is associated with the target management table 600 as discussed above by the external logical unit number.

The host type column 702 holds the type of an upper device using the external logical unit. In this embodiment, the host type includes "master" indicating the master management apparatus 5 and "individual" indicating the device (i.e., the host apparatus 3) other than the master management apparatus 5.

The group column 703 holds a group name identifying the host apparatus 3 using the same boot image. The host apparatus 3 assigned the same group name refers to the same common logical unit.

The internal logical unit number column 704 holds a number (internal logical unit number) uniquely identifying the logical unit in the storage apparatus 4. If the host type is "master", the held number is an internal logical unit number of the internal logical unit used as a common logical unit. If the host type is "individual", it is an internal logical unit number of the internal logical unit used as an individual logical unit.

The access control information column 705 holds information for determining, when a write request is issued to an external logical unit, as to whether or not a data block designated by the write request matches a data block in a common logical unit. In the initial state, "invalid" is set in each entry. In this embodiment, the access control information includes "valid" and "invalid". When the access control information column 705 indicates "valid", the data matching is performed.

### (2-3) Configuration of common logical unit management table

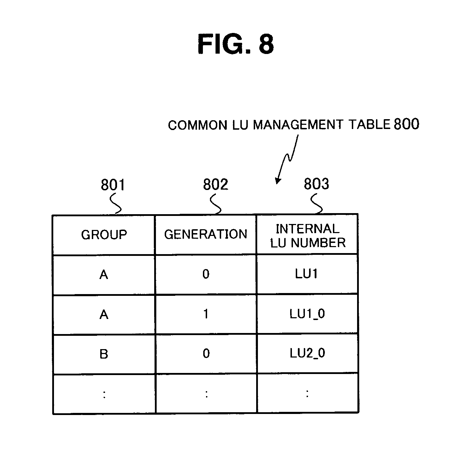

FIG. 8 shows an example of the common logical unit management table 800 of the storage apparatus 4 according to an embodiment of the present invention. The common logical unit management table 800 manages the group of the host apparatus 3 that uses the common logical unit and the generation of the common logical unit.

As shown in FIG. 8, the common logical unit management table 800 includes a group column 801, a generation column 802, and an internal logical unit number column 803.

The group column 801 holds a group name identifying the group of the host apparatus 3 that uses the same boot image, and is the same as that of the external logical unit management table 700.

The generation column 802 holds the generation of a created common logical unit each time the master is updated. Therefore, when the master is updated plural times, plural generations of a common logical unit are created. The master is updated by the master management apparatus 5 as described later.

The internal logical unit number column 803 holds the internal logical unit number of the internal logical unit used as a common logical unit.

### (2-4) Configuration of external logical unit block mapping table

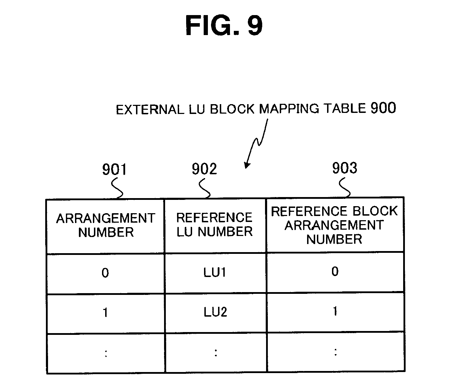

FIG. 9 shows an example of an external logical unit block mapping table 900 of the storage apparatus 4 according to an embodiment of the present invention. The external logical unit block mapping table 900 shows the data storage position in the common logical unit or the individual logical unit assigned to an external logical unit, and one external logical unit block mapping table 900 is generated for one external logical unit.

As shown in FIG. 9, the external logical unit block mapping table 900 includes an arrangement number column 901, a reference logical unit number column 902, and a reference block arrangement number column 903.

The arrangement number column 901 holds the total number of blocks of external logical units. For example, when the host type of an external logical unit is "master", and the block management unit is "8", the arrangement number "0" indicates the blocks of the logical block addresses "0" to "7", and the arrangement number "1" indicates the blocks of the logical block addresses "8" to "15". When the host type of the external logical unit is "individual", the block management unit is "8", and the management start LBA described later is "1", the arrangement number "0" indicates the block of the logical block address "0", the arrangement number "1" indicates the blocks of the logical block addresses "1" to "8", and the arrangement number "2" indicates the blocks of the logical block addresses "9" to "16".

The reference logical unit number column 902 holds the number of the internal logical unit storing the data in the block indicated by the arrangement number column 901.

The reference block arrangement number column 903 refers to the arrangement number of the internal block of the internal logical unit storing data in the block indicated by the arrangement number column 901. For example, the reference block arrangement number "0" indicates a block group of the internal block "0" of the internal logical unit, and the reference block arrangement number "1" indicates a block group of the block "1" of the internal logical unit.

### (2-5) Configuration of image management table

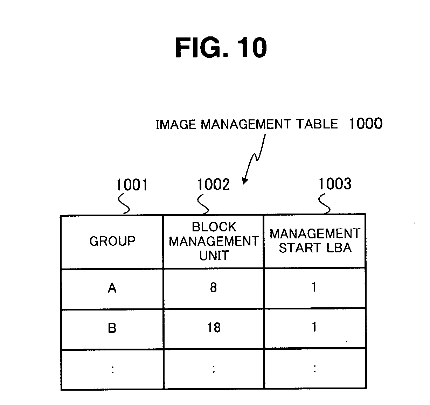

FIG. 10 shows an example of the image management table 1000 of the storage apparatus 4 according to an embodiment of the present invention. The image management table 1000 manages the information depending on the file system of the OS used by the host apparatus 3.

As shown in FIG. 10, the image management table 1000 includes a group column 1001, a management block unit column 1002, and a start management logical block address (LBA) column 1003.

The group column 1001 holds a group name identifying the group of the host apparatus 3 using the same boot image. Therefore, it is the same as that of the common logical unit management table 800.

The management block unit column 1002 indicates the minimum area size in which data is stored. Specifically, data is stored in a management block unit. For example, "8" shows that eight blocks (512 x 8 bytes) are a management block unit. When data is stored, a size of a multiple of a management block unit is used.

The management start LBA column 1003 holds the leading logical address of the data area in the logical units formed in the drive unit 41 (internal logical unit). This is the information for an offset of the number of blocks to store the format information about a disk in several leading blocks of the disk.

### (2-6) Configuration of internal logical unit block management table

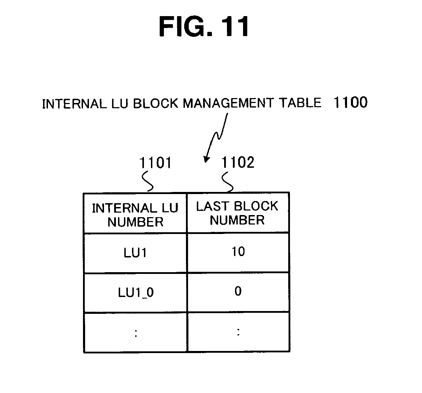

FIG. 11 shows an example of the internal logical unit block management table 1100 of the storage apparatus 4 according to an embodiment of the present invention. The internal logical unit block management table 1100 manages the use status of the blocks of an internal logical unit.

As shown in FIG. 11, the internal logical unit block management table 1100 includes an internal logical unit number 1101 and a last block number column 1102.

The internal logical unit number 1101 holds a number uniquely showing an internal logical unit. The last block number column 1102 indicates the arrangement number of an internal block in which data is last written in the blocks managed at the management block unit in the internal logical units (i.e., internal blocks).

### (2-7) Configuration of common logical unit data management table

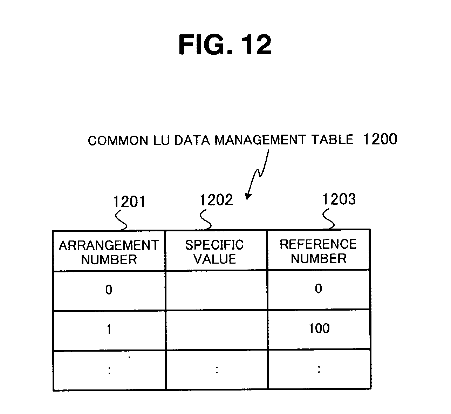

FIG. 12 shows an example of the common logical unit data management table 1200 of the storage apparatus 4 according to an embodiment of the present invention. The common logical unit data management table 1200 manages data stored in a common logical unit, and manages the identity of data and the reference numbers. One common logical unit data management table 1200 is created for one common logical unit.

As shown in FIG. 12, the common logical unit data management table 1200 includes an arrangement number column 1201, a specific value column 1202, and a reference number column 1203.

The arrangement number column 1201 corresponds to the reference block arrangement number column 903 in the external logical unit block mapping table 900, and holds the number of the internal block of the internal logical unit.

The specific value column 1202 holds a value calculated based on the stored data block, and can be, for example, a hash value. That is, by comparing write data with the value indicated in the specific value column 1202, the identity of data can be determined.

The reference number column 1203 holds the number of the external logical units referring to the internal blocks expressed by arrangement numbers.

### (3) Explanation of various processes

### (3-1) Master generating process

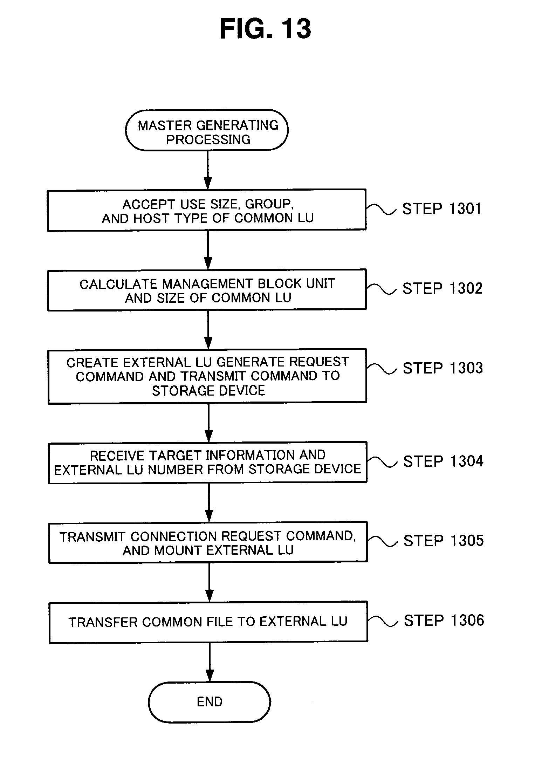

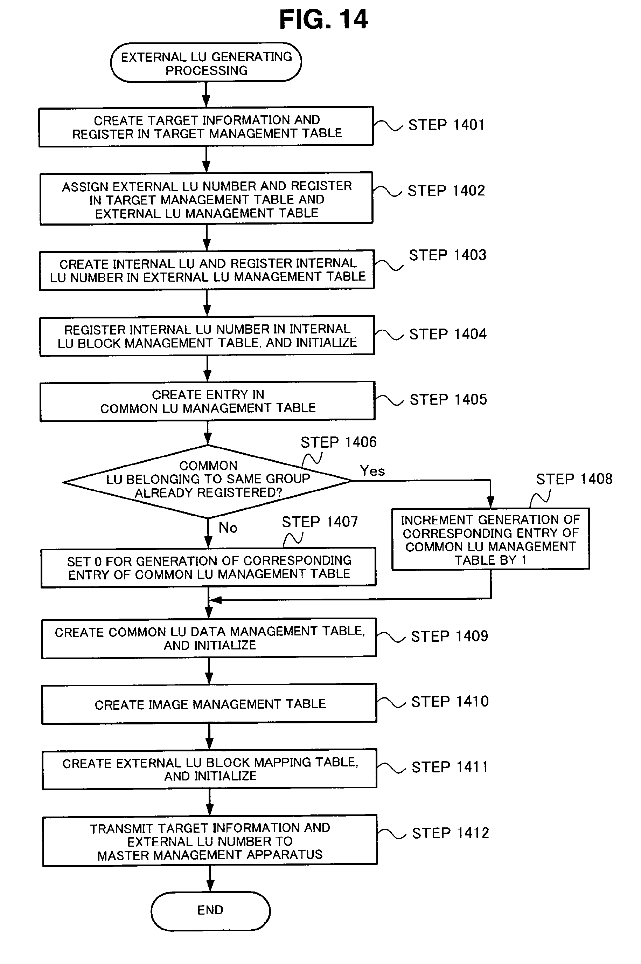

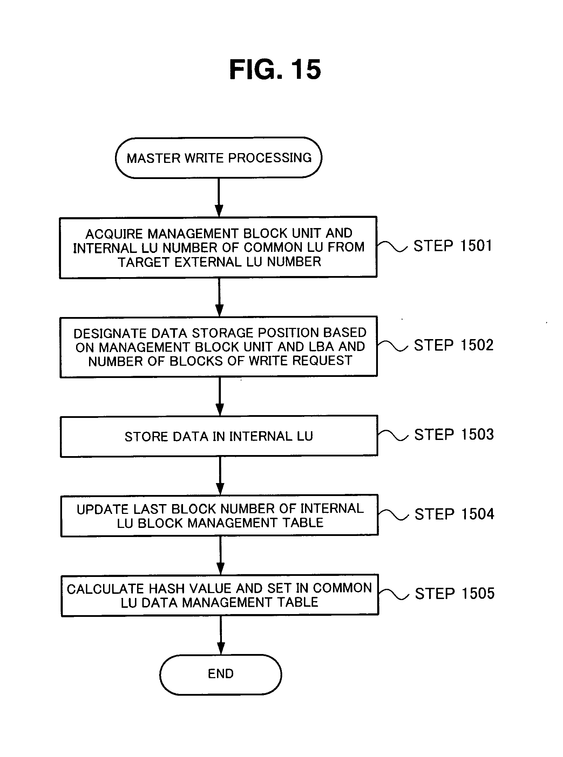

The master generating process by the computer system according to an embodiment of the present invention is described below with reference to FIGs. 13-15. FIG. 13 is a flowchart for explaining the master creating processing in the master management apparatus 5 according to an embodiment of the present invention. Further, FIG. 14 is a flowchart for explaining the common logical unit creating processing in the storage apparatus 4 according to an embodiment of the present invention. Lastly, FIG. 15 is a flowchart for explaining the master write processing in the storage apparatus 4 according to an embodiment of the present invention.

The master creating processing is to extract a file (i.e., common file) for common use by each host apparatus 3, and create a common logical unit based on the extraction.

The system administrator first inserts a recording medium such as an optical disk (CD and DVD) storing a boot image for the host apparatus 3 into an input/output device 54 of the master management apparatus 5. When the master management apparatus 5 is powered on, the master management apparatus 5 is booted up by mounting and reading the boot image. The master management apparatus 5 can also be booted up after the boot image is installed into an auxiliary storage apparatus 55. Then, the master creation program 521 can be executed on the master management apparatus 5.

The master creation program 521 executed by the master management apparatus 5 displays a predetermined disk management screen using the disk management function of the OS, and accepts the size, group, and host type of the storage area (common logical unit) in the storage apparatus 4 to be set (STEP 1301). Then, the master creation program 521 calculates the management block unit and management start LBA according to the specification of the file system of the OS, and calculates the size of the common logical unit based on the use size of the storage area and the management block unit (STEP 1302). It is preferred that the use size of the storage area can be set such that the total number of blocks of the common logical unit can be a multiple of the management block unit.

The master creation program 521 next creates an external logical unit creation request command, and transmits the command to the logical unit management program 4222 in the storage apparatus 4 through the management interface 426 of the storage apparatus 4 (STEP 1303). The external logical unit creation request command includes, as its parameters, for example, a host type, a group, a management block unit, a management start LBA and a size of a common logical unit. In this example, the parameters of the external logical unit creation request command are "host type: master", "group: A", "management block unit: 8", "management start LBA:1", and "size of common logical unit: X".

The logical unit management program 4222 being executed on the storage apparatus 4 performs the following external logical unit creation processing after receiving an external logical unit creation request command in which "host type: master" is specified.

Specifically, the logical unit management program 4222 creates target information about the target to which an external logical unit is assigned, and registers the target information to the target information column 601 of the target management table 600 (STEP 1401). Then, the logical unit management program 4222 assigns an external logical unit number to the target, registers the external logical unit number in the external logical unit number column 602 of the target management table 600, and in the external logical unit number column 701 of the external logical unit management table 700 (STEP 1402).

After calculating the size of the internal logical unit based on the "size of common logical unit: X" specified by the external logical unit creation request command, the logical unit management program 4222 creates an internal logical unit, and registers the internal logical unit number in the internal logical unit number column 704 of the external logical unit management table 700 (STEP 1403). The logical unit management program 4222 registers the internal logical unit number in the internal logical unit number column 901 of the internal logical unit block management table 900, sets "0" to the last block number column 902, and perform initialization (STEP 1404). Also, the logical unit management program 4222 registers "master" in the host type column 702 of the external logical unit management table 700, and "A" in the group column 703 according to the external logical unit generate request command.

The logical unit management program 4222 next adds a new entry to the common logical unit management table 800, and registers "A" in the group column 801 (STEP 1405). Then, the logical unit management program 4222 determines whether or not the common logical unit belonging to the same group has been registered in the common logical unit management table 800 (STEP 1406). If the logical unit management program 4222 determines that it has not been registered (NO in STEP 1406), The logical unit management program 4222 registers "0" in the generation column 802 of the entry (STEP 1407). On the other hand, if the logical unit management program 4222 determines that the common logical unit belonging to the same group is registered in the common logical unit management table 800 (YES in STEP 1406), the logical unit management program 4222 increases the value indicated in the generation column 802 of the entry by 1 (STEP 1408).

Next, the logical unit management program 4222 calculates total number of blocks (i.e., total number of arrangements) based on the "size of common logical unit: X" and the "management block unit: 8" specified in the external logical unit creation request command, creates the common logical unit data management table 1200 corresponding to the total number of arrangements for the common logical unit, and registers "0" in the reference number column 1203 corresponding to each arrangement number for initialization (STEP 1409).

Furthermore, the logical unit management program 4222 creates a new entry in the image management table 1100 for each group having the value of "0" of generation column 802 of the common logical unit management table 800, and registers the group, the management block unit, and the management start LBA respectively in the group column 1101, the block management unit column 1102, and the leading LBA column 1103 of the corresponding entry (STEP 1409).

Next, the logical unit management program 4222 creates the external logical unit block mapping table 900 for the external logical unit depending on the total number of blocks (total number of arrangements) calculated based on the "size of common logical unit: X" and the "management block unit: 8" specified by the external logical unit generate request command, and sets a value indicating non-reference, for example, "-1", in the reference block arrangement number column 1003 corresponding to each arrangement number for initialization (STEP 1411).

Then, the logical unit management program 4222 transmits the created target information and the external logical unit number to the master management apparatus 5 through the management interface 426 (STEP 1412).

Referring back to FIG. 13, if the master creation program 521 on the master management apparatus 5 receives the target information and the external logical unit number transmitted from the storage apparatus 4 (STEP 1304), the master creation program transmits a connection request command to the host interface 423 of the storage apparatus 4 using the storage connection function, connects and mounts the previously generated external logical unit (STEP 1305). The connection request command includes the target information indicating the external logical unit as a target.

Next, the master creation program 521 selects all common files, and then transfers the data configuring the selected common file to the mounted external logical unit (STEP 1306). Data is written typically from the leading position (LBA=0) of the external logical unit.

Specifically, the master creation program 521 calculates, with reference to the file address management information of the file system, the logical block address of the storage area of an auxiliary storage apparatus 53 storing the data configuring a common file. The master creation program 521 then reads the data block by block, accessing the storage area in a block unit, and transmits to the storage apparatus 4 a master write request command for writing the read data to the mounted external logical unit. The master write request command includes a logical block address, the number of blocks, and data (i.e., write data). The master write request command received by the storage apparatus 4 is passed to the disk access program 4221, and written to the common logical unit on the drive unit 41 according to the master write process shown in FIG. 15.

Prior to the transfer of the data, as described above, a virtually created external logical unit in the storage apparatus 4 as a target is mounted on the master management apparatus 5 based on the connection request command. Thus, the disk access program 4221 acquires, with reference the target management table 600, an external logical unit number from the external logical unit number column 602 for the target, and acquires, with reference to the external logical unit management table 700, respectively an internal logical unit number from the internal logical unit number column 704 about the acquired external logical unit number and a group from the group column 703. Then, the disk access program 4221 acquire, with reference to the image management table 1000, a management block unit from the management block unit column 1002 about the group (STEP 1501).

Next, the disk access program 4221 calculates, with reference to refers to the external logical unit block mapping table 900, an arrangement number based on the logical block address (LBA) and the number of blocks specified by the acquired management block unit and the master write request command. The disk access program 4221 registers the acquired internal logical unit number in the reference logical unit number column 902 of the external logical unit block mapping table 900, and further the same value as the arrangement number in the reference block arrangement number column 903 (STEP 1502). Then, the disk access program 4221 stores write data in the block indicated by the reference block arrangement number column 903 of the internal logical unit number indicated by the reference logical unit number column 902 (STEP 1503).

When the writing of data is completed, the disk access program 4221 updates the last block number corresponding to the internal logical unit block management table 1100 depending on the number of blocks of the written data (STEP 1504).

For example, if the management block unit for the target external logical unit is "8", and "LBA: 0 x 0" and "number of blocks : 16" are specified in the master write request command, the arrangement numbers are "0" and "1 ". Therefore, the write data is stored in 8 blocks in the position indicated by the reference block arrangement number "0" of the internal logical unit, then stored in 8 blocks in the position indicated by the reference block arrangement number "1". In this case, since data in two internal blocks are stored, "2" is registered in the last block number column 1102 of the internal logical unit block management table 1100.

Finally, the disk access program 4221 calculates the specific value (hash value) for each data block based on the stored data, and registers the value in the specific value column 1202 corresponding to the arrangement number of the common logical unit data management table 1200 (STEP 1505).

### (3-2) Boot image generating process

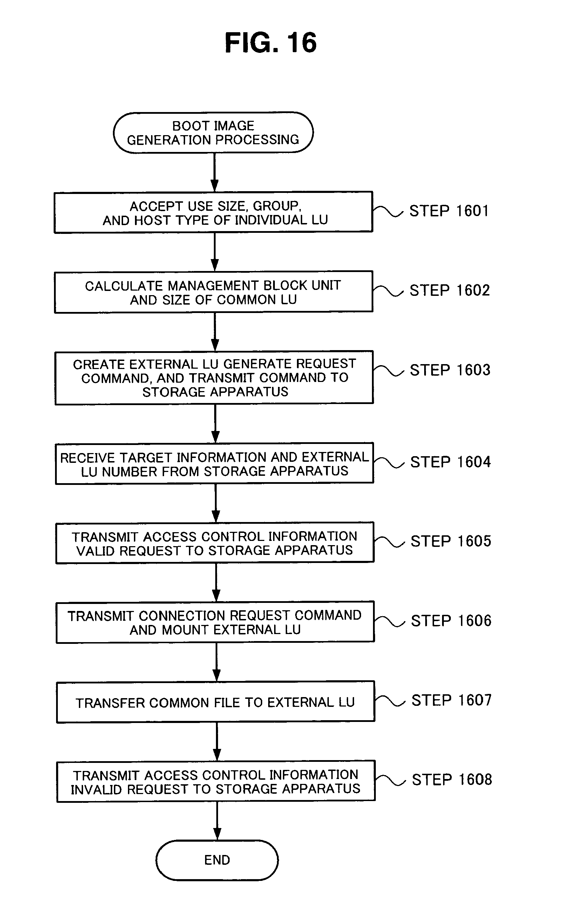

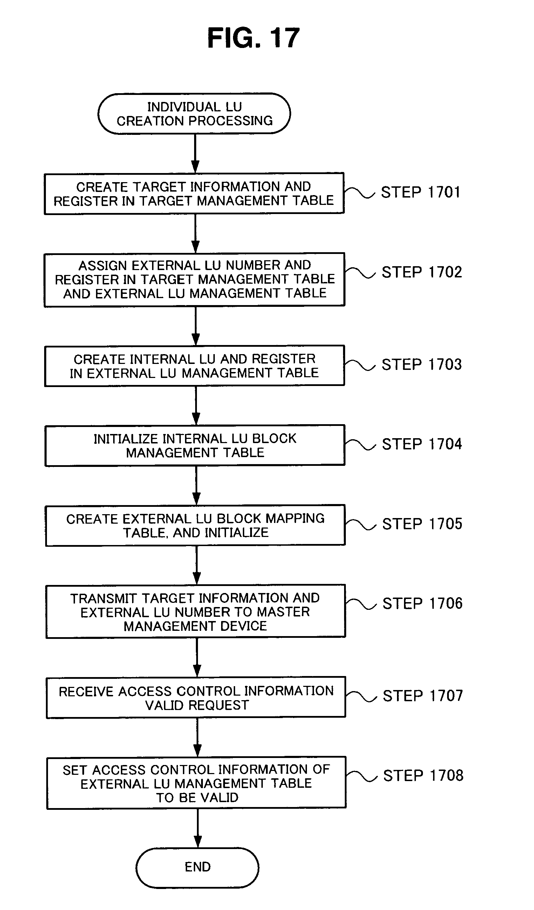

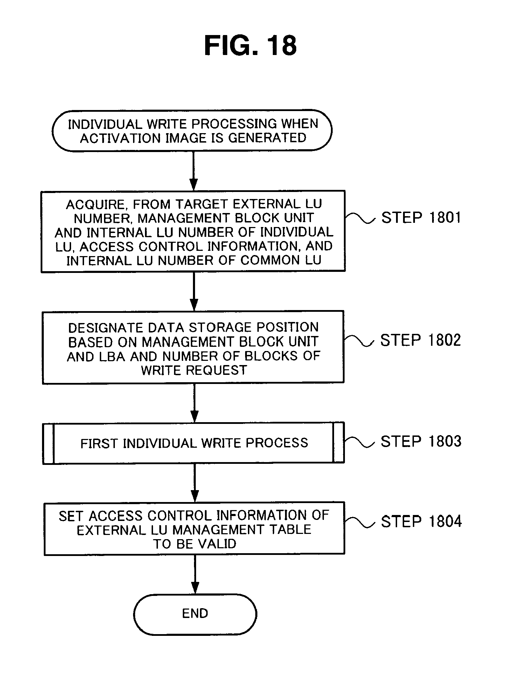

The boot image creation processing in the computer system according to an embodiment of the present invention is described below with reference to FIGs. 16-18. FIG. 16 is a flowchart for explaining the boot image creation processing in the master management apparatus 5 according to an embodiment of the present invention. FIG. 17 is a flowchart for explaining the individual logical unit creation processing in the storage apparatus 4 according to an embodiment of the present invention. FIG. 18 is a flowchart for explaining the individual write processing when a boot image is created in the storage apparatus 4 according to an embodiment of the present invention.

The boot image creation processing creates a boot image used by the host apparatus 3. Since a boot image used in the master creation processing is used for the boot image of the host apparatus 3, the file for the OS and the application program is shared. The system administrator can arbitrarily set the size of the individual logical unit in which a boot image is created. However, in this example, it may be assumed that the number of blocks of the individual logical unit is a multiple of the management block unit, and is set with a value larger than the size of the common logical unit.

After the system administrator operates the master management apparatus 5 and specifies the execution of the image creation program 522, the image creation program 522 calls the disk management function of the OS, and accepts, on a predetermined disk management screen, the use size, group, and host type of the individual logical unit in the storage apparatus 4 to be set (STEP 1601). In response to this, the image creation program 522 calculates the management block unit and the management start LBA according to the specification of the file system of the OS (STEP 1602). Then, the image creation program 522 creates an external logical unit creation request command, and transmits the command to the logical unit management program 4222 of the storage apparatus 4 through the management interface 426 of the storage apparatus 4 (STEP 1603). In this embodiment, the external logical unit generate request includes as its parameters "host type: individual", "group: A", and "size of individual logical unit: Y".

Upon receipt of an external logical unit creation request command, the logical unit management program 4222 executed on the storage apparatus 4 performs the following external logical unit creation processing to create an individual logical unit.

More specifically, the logical unit management program 4222 creates the target information about the target to which an external logical unit is to be assigned, and registers the information in the target information column 601 of the target management table 600 (STEP 1701). The logical unit management program 4222 assigns an external logical unit number to the target, registers the external logical unit number in the external logical unit number column 602 of the target management table 600, and in the external logical unit number column 701 of the external logical unit management table 700 (STEP 1702).

The logical unit management program 4222 then calculates the size of the internal logical unit based on the "size of individual logical unit" specified by the external logical unit creation request command, creates an internal logical unit, and registers the internal logical unit number in the internal logical unit number column 704 of the external logical unit management table 700 (STEP 1703). Correspondingly, the logical unit management program 4222 registers the internal logical unit number in the internal logical unit number column 901 of the internal logical unit block management table 900, and sets "0" in the last block number column 902 for initialization (STEP 1704). In addition, according to an external logical unit creation request command, the logical unit management program 4222 registers "individual" in the host type column 702 and "A" in the group column 703 in the external logical unit management table 700.

The logical unit management program 4222 calculates the total number of blocks (total number of arrangements) based on the "size of individual logical unit: Y" and the "management block unit: 8" specified by the external logical unit creation request command, and creates the external logical unit block mapping table 900. The logical unit management program 4222 then sets a value indicating non-reference, for example, "-1" in the reference block arrangement number column 1003 corresponding to each arrangement number, and initializes the external logical unit block mapping table 900 (STEP 1705).

After that, the logical unit management program 4222 transmits the target information and the external logical unit number to the master management apparatus 5 (STEP 1706).

Referring back to FIG. 16, upon receipt of the target information and the external logical unit number transmitted from the storage apparatus 4 (STEP 1604), the image creation program 522 transmits an access control information valid request command to the logical unit management program 4222 through the management interface 426 of the storage apparatus 4 (STEP 1605). The access control information valid request command includes an external logical unit number in its parameter.

Upon receipt of the access control information valid request command (STEP 1701 in FIG. 17), the logical unit management program 4222 sets "valid" for the value of the access control information column 705 about the external logical unit number in the external logical unit management table 700 (STEP 1708).

Referring back to FIG. 16, the image creation program 522 transmits a connection request command to the host interface 423 of the storage apparatus 4 using the storage connection function to connect to the external logical unit, and mounts the external logical unit (STEP 1606). The image creation program 522 may also format the mounted external logical unit prior to the next data transfer.

The image creation program 522 next selects an individual file, and then transfers the data configuring the selected individual file to the mounted external logical unit (STEP 1306). The data may be written typically from the leading position (LBA=0) of the external logical unit.

More specifically, the image creation program 522 calculates, with reference to the file address management information of the file system, the logical block address of the storage area of the auxiliary storage apparatus 53 storing the data configuring an individual file, accesses the storage area in a block unit and sequentially reads data, and transmits to the storage apparatus 4 an individual write request command for writing the read data to the mounted external logical unit. The individual write request command includes a logical block address, a number of blocks, and write data. The individual write request command received by the storage apparatus 4 is passed to the disk access program 4221, and written to a predetermined storage area on the drive unit 41 according to the individual write process shown in FIG. 18. When the individual write processing is completed, the image creation program 522 transmits the access control information invalid request command to the logical unit management program 4222 through the management interface 426 of the storage apparatus 4 (STEP 1608).

Prior to the transfer of the data, as described above, a virtually generated external logical unit (individual logical unit) in the storage apparatus 4 as a target is mounted on the master management apparatus 5 based on the connection request command. Thus, the disk access program 4221 acquires, with reference to the target management table 600, an external logical unit number from the external logical unit number column 602 for the target, and then acquires, with reference to the external logical unit management table 700, an internal logical unit number from the internal logical unit number column 704 about the acquired external logical unit number and a group from the group column 703 respectively. The disk access program 4221 then refers to the image management table 1000 to acquire a management block unit from the management block unit column 1002 about the group. Furthermore, since the host type is "individual", the disk access program 4221 acquires, with reference to the external logical unit management table 700, access information from the access control information column 705, and acquires, with reference to the group column 703 and the host type column 702, an internal logical unit number from the internal logical unit number column 704 about the internal logical unit (that is, a common logical unit) as a master in the same group (STEP 1801).

Further, the disk access program 4221 calculates, with reference to the external logical unit block mapping table 900, an arrangement number based on the logical block address and the number of blocks specified by the acquired management block unit and individual write request. Then, the disk access program 4221 registers the acquired internal logical unit number in the reference logical unit number column 902 of the external logical unit block mapping table 900, and the same value as the arrangement number in the reference block arrangement number column 903 (STEP 1802).

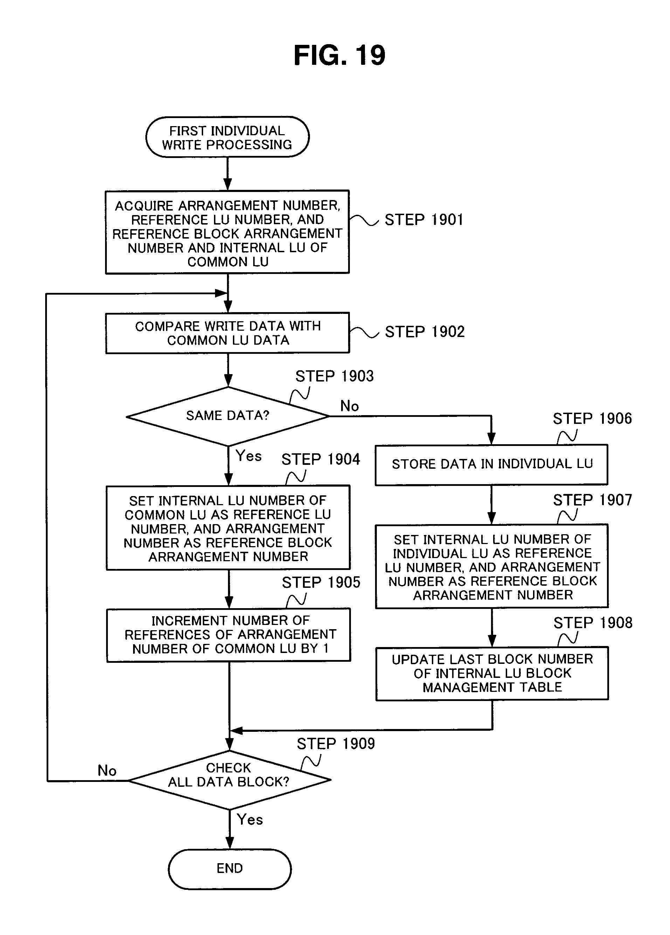

Since the access control information is "valid" at this time, the disk access program 4221 (refer to STEP 1708 shown in FIG. 17), the first individual write processing of performing a matching process on all written data blocks is performed (STEP 1803). The first individual write processing is described with reference to FIG. 19.

When the first individual write processing is completed, as described above, the image creation program 522 transmits an access control information invalid request command to the logical unit management program 4222 through the management interface 426 of the storage apparatus 4. The logical unit management program 4222 that has received the access control information invalid request command changes the value of the access control information column 705 in the external logical unit management table 700 about the external logical unit into "invalid" (STEP 1804).

### (3-3) Read/write processing of files by host apparatus 3

The host apparatus is activated from the storage apparatus 4 connected over the network 2 using the target information obtained in the above-mentioned boot image generating processing.

Specifically, when the host apparatus 3 is turned on, the boot program of the host apparatus 3 transmits a connection request command to mount the target external logical unit using the storage connection function. The connection request command includes the target information for identifying a target. Upon receipt of the connection request command, the disk access program 4221 acquires, with reference to the target management table 600 as described above, an external logical unit number from the target information. Using the acquired external logical unit number, the disk access program 4221 refers to each of the external logical unit management table 700, the image management table 1000, and the external logical unit block mapping table 900, and thus acquires a management block unit, a management start LBA, access control information, an internal logical unit number for an external logical unit as an individual logical unit, and an internal logical unit number for the external logical unit as a common logical unit from the corresponding entries. Further, the disk access program 4221 creates session information for uniquely identifying the connection request command, registers the session information in the session information column 603 about the external logical unit in the target management table 600, and transmits the created session information to the boot program of the host apparatus 3. Thus, a session is established between the host apparatus 3 and the storage apparatus 4, and an external logical unit is mounted.

The boot program accesses a file in the mounted external logical unit, and activates the OS. The host apparatus invokes an application program on the OS. Thus, the application program running on the host apparatus 3 can I/O access an external logical unit of the storage apparatus 4. In other words, when the application program issues an I/O request to a predetermined file, a write request command or a read request command is transmitted to the host interface 423 of the storage apparatus 4. Then, in response to the command the disk access program 4221 accesses the drive unit 41 based on the command and makes a reply. The write request command includes session information, a logical block address, the number of blocks, and write data. Upon receipt of the write request command, the disk access program 4221 acquires, with reference to the target management table 600, an external logical unit number of the target matching the session information. The disk access program 4221 acquires access control information from the external logical unit management table 700 using the acquired external logical unit number. In this case, if the host type is "individual", and the access control information is "invalid", then a data block is compared only if a write process is performed on a common logical unit in the second individual write process.

### (3-4) First individual write processing

FIG. 19 is a flowchart for explaining the first individual write processing in the storage apparatus according to an embodiment of the present invention. The first individual write process is performed when the access control information about a target external logical unit is "valid".

As shown in FIG. 19, when the disk access program 4221 receives a write request command, the disk access program 4221 acquires the arrangement number, the reference logical unit number, and the reference block arrangement number of a block to which data is to be written from the external logical unit block mapping table 900 based on the management block unit, the management start LBA, the logical block address of a destination, and the number of blocks, and further acquires the internal logical unit number of the common logical unit belonging to the same group from the common logical unit management table 800 (STEP 1901).

The disk access program 4221 next calculates a hash value of the write data in a management block unit, compares the calculated hash value with a specific value of the common logical unit data management table 1200, and when the hash value matches the specific value, reads data from the internal logical unit, and compares the write data with the read data in a byte unit (STEP 1902).

If the disk access program 4221 determines that the data matching each other as a result of the comparison (YES in STEP 1903), a reference logical unit number and a reference block arrangement number are set again in the external logical unit block mapping table 900 so that the disk access program can refer to the latest common logical unit (STEP 1904). Then, the disk access program 4221 updates the number of references of the new and old common logical unit data management tables 1200 (STEP 1905).

On the other hand, when the disk access program 4221 determines that there is no same data in the common logical unit (NO in STEP 1903), write data is stored in the individual logical unit. Namely, the disk access program 4221 acquires, with reference to the internal logical unit block management table 1100, a last block number, and stores write data in the block indicated by the last block number (STEP 1906). Then, the disk access program 4221 sets again the reference logical unit number and the reference block arrangement number in the external logical unit block mapping table 900 (STEP 1907), and updates the last block number of the internal logical unit block management table 1100 (STEP 1908).

The disk access program 4221 determines whether or not data matching has been performed on all data blocks (STEP 1909). If there is a data block on which the data matching has not been performed (NO in STEP 1909), then control is returned to the process in STEP 1902.

### (3-5) Second individual write process

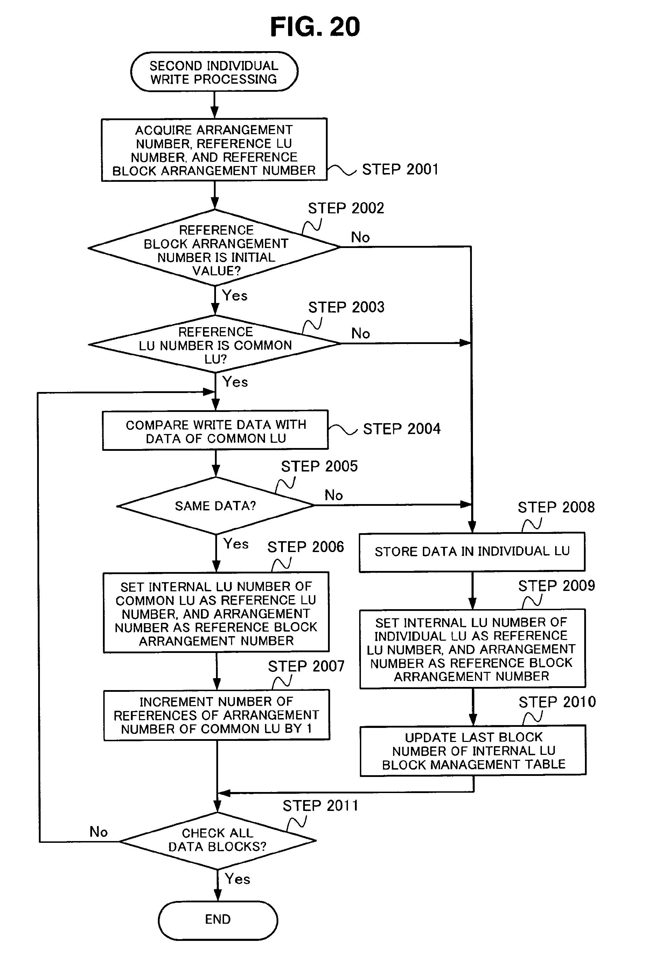

FIG. 20 is a flowchart for explaining the second individual write processing in the storage apparatus according to an embodiment of the present invention. The second individual write processing is performed when access control information about a target external logical unit is "invalid."

Referring to FIG. 20, upon receipt of a write request command, the disk access program 4221 acquires an arrangement number, a reference logical unit number, and a reference block arrangement number of the block to which data is to be written from the external logical unit block mapping table 900 based on the management block unit, the management start LBA, the logical block address of a destination, and the number of blocks (STEP 2001).

The disk access program 4221 next refers to the external logical unit block mapping table 900 to determine that the reference block arrangement number remains an initial value, for example, "-1" (STEP 2002). If the disk access program 4221 determines that the reference block arrangement number remains an initial value (NO in STEP 2002), then the disk access program 4221 performs the processes in STEP 2008 to STEP 2010. The processes in STEP 2008 to STEP 2011 are the same as the processes in STEP 1906 to STEP 1909 shown in FIG. 19. Therefore, the explanation is omitted here.

On the other hand, if the disk access program 4221 determines that the reference block arrangement number is a value other than an initial value (YES in STEP 2002), and further determines whether or not the reference logical unit number indicates a common logical unit (STEP 2003). If the disk access program 4221 determines that the reference logical unit number does not indicate a common logical unit (i.e., an individual logical unit) (NO in STEP 2003), the disk access program 4221 performs the processes in STEP 2008 to STEP 2010 as well.

If the disk access program 4221 determines the reference logical unit number indicates a common logical unit (YES in STEP 2003), the disk access program 4221 checks the identity of the data for each management block as in the above-mentioned first individual write process, and writes the data to the common logical unit or the individual logical unit (STEP 2004 to STEP 2010). Since the processes in STEP 2004 to STEP 2011 are the same as the processes in STEP 1902 to STEP 1909 shown in FIG. 19, the explanation is omitted here.

### (3-6) Read processing

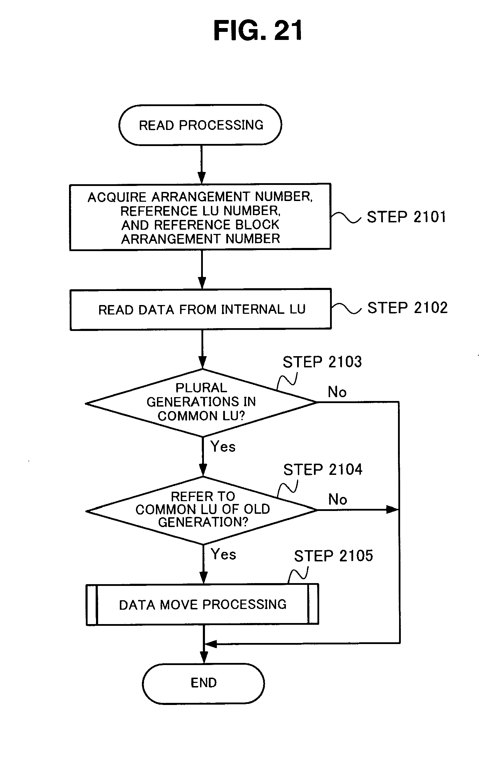

FIG. 21 is a flowchart for explaining the read processing in the storage apparatus according to an embodiment of the present invention.

The read request command transmitted from the host apparatus 3 includes session information, a logical block address, and the number of blocks. Upon receipt of a read request command, the disk access program 4221 acquires a target external logical unit number specified by the session information. Also, the disk access program 4221 acquires an arrangement number, a reference logical unit number, and a reference block arrangement number of the block from which data is to be read, from the external logical unit block mapping table 900 with respect to the acquired external logical unit number (STEP 2101). The reference logical unit number is an internal logical unit number of a common logical unit or an individual logical unit.

Next, the disk access program 4221 acquires, with reference to the external logical unit block mapping table 900, the reference logical unit number and the reference block arrangement number of the acquired arrangement number, and specifies the block position and the number of blocks of the internal logical unit from which data is to be read (STEP 2102). Then, the disk access program 4221 reads data for each management block from the block position of the specified internal logical unit (STEP 2103).

If the master update processing as described later is performed, there may exist a plurality of common logical units of different generations. Therefore, the disk access program 4221 determines whether or not there are a plurality of generations in the common logical units belonging to the same group (STEP 2103). If the disk access program 4221 is determined there are a plurality of generations (YES in STEP 2103), the disk access program 4221 is further determined whether or not the read-requested data refers to a common logical unit of an old generation (STEP 2104). If so (YES in STEP 2104), the following data move process is performed (STEP 2105).

### (3-7) Data move processing

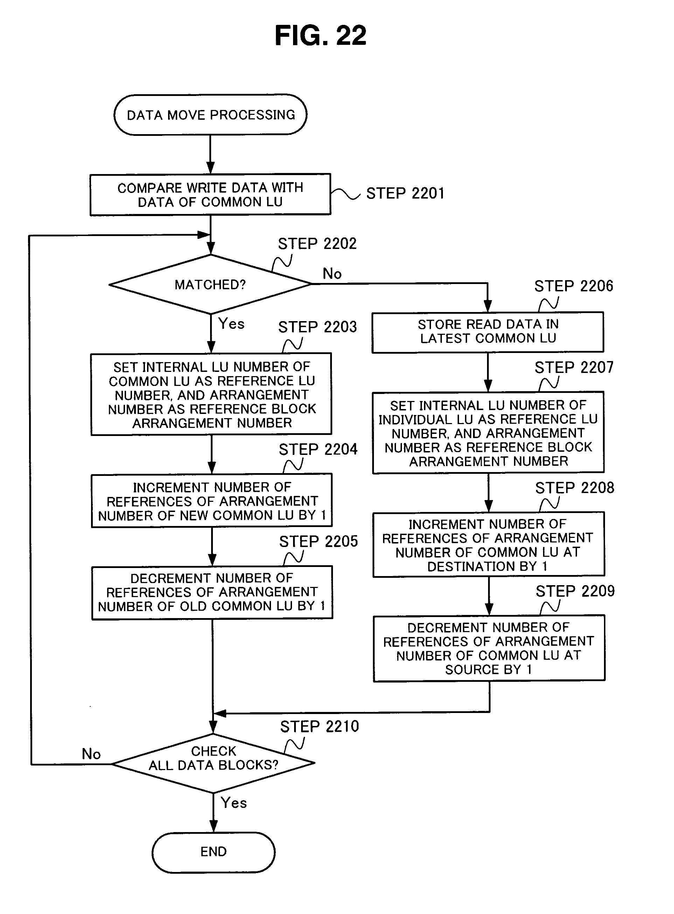

FIG. 22 is a flowchart for explaining the data move processing in the storage apparatus 4 according to an embodiment of the present invention.

Specifically, the disk access program 4221 calculates a hash value of read data for each management block, compares the calculated hash value with a specific value of the common logical unit data management table 1200 of the common logical unit, and if the hash value matches the specific value, reads data from the internal logical unit, and compares write data with read data for each byte (STEP 2201).

If the disk access program 4221 determines that the data match each other as a result of the comparison (YES in STEP 2202), a reference logical unit number and a reference block arrangement number are set again in the external logical unit block mapping table 900 to refer to the latest common logical unit (STEP 2203). Then, the disk access program 4221 updates the number of references of the new and old common logical unit data management tables 1200 (STEP 2204 to STEP 2205).

Meanwhile, if the disk access program 4221 determines that the data do not match each other, that is, when the common logical unit of a new generation does not include the same data (NO in STEP 2202), the read data is copied to the latest common logical unit (STEP 2206). In this case, the disk access program 4221 sequentially stores data from the position of the last block number, and after the copy is completed, the last block number of the internal logical unit block management table 1100 is updated depending on the number of blocks storing data.

Next, the disk access program 4221 sets again the reference logical unit number and the reference block arrangement number of the external logical unit block mapping table 900 so that the disk access program 4221 can refer to the latest common logical unit (STEP 2207). Then, the disk access program 4221 updates the number of references of the new and old common logical unit data management table 1200 (STEP 2208 to STEP 2209).

The disk access program 4221 determines whether or not data matching for all data blocks have been performed (STEP 2210). If there is are any data block that have not been checked (NO in STEP 2210), control is returned to STEP 2202.

### (3-8) Master update processing

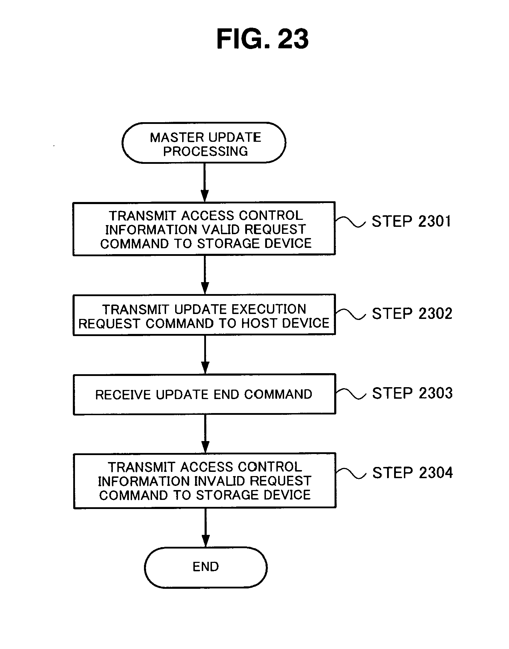

FIG. 23 is a flowchart for explaining the master update processing in the storage apparatus according to an embodiment of the present invention.

The master update processing is to update a file (common file) of the OS, an application program and the like commonly used by each host apparatus 3. When each host apparatus simply performs a common file update process, data is moved to an individual logical unit, thereby failing in referring to data in the common logical unit. Therefore, in this embodiment, the common files can be referred to although each of the common files is updated.

First, the system administrator operates the master management apparatus 5 to update a common file. Then, the master creation program 521 performs the above-mentioned boot image creation processing. Thus, an entry about common logical units of different generations belonging to the same group is newly added.

Next, the update management program 523 transmits an access control information valid request command to the logical unit management program 4222 through the management interface 426 of the storage apparatus 4 (STEP 2301). The access control information valid request command includes an external logical unit number of a target external logical unit of the host apparatus 3. In response to this, the logical unit management program 4222 of the storage apparatus 4 changes the value of the access control information column 705 corresponding to the external logical unit number in the external logical unit management table 700.

The update management program 523 transmits an update execution request command to the update request reception program 321 of the host apparatus 3 (STEP 2302). The update execution request command includes the file name to be updated and data configuring the file. Thus, the update request reception program 321 updates (i.e., adds, replaces, etc.) a file. When the host apparatus 3 performs the updating process, the host apparatus 3 transmits a write request command.

When the disk access program 4221 of the storage apparatus 4 receives the write request command from the host apparatus 3, the disk access program 4221 performs the first individual write processing of performing data comparing to check whether or not all write data match the stored data because the access control information about the external logical unit has been changed to "valid".

When the host apparatus 3 completes the updating process, the host apparatus 3 transmits the update end command to the master management apparatus 5, and thus the update management program 523 receives the command (STEP 2303).

The update management program 523 transmits an access control information invalid request command to the logical unit management program 4222 through the management interface 426 of the storage apparatus 4 (STEP 2304). The access control information invalid request command includes an external logical unit number of the target external logical unit of the host apparatus 3. In response to this, the logical unit management program 4222 changes the value of the access control information column 705 corresponding to the external logical unit in the external logical unit management table 700 into "invalid".

Therefore, when the host apparatus 3 then issues a write request for a file of the external logical unit, the disk access program 4221 performs the second individual write processing. As described above, in the second individual write processing, comparing can be performed only on the write data for a common logical unit.

The comparing processing between the write data according to the write request by the host apparatus 3 and the data stored in a common logical unit can be performed with disk access. Therefore, it is desired that the first individual write processing in which the comparing process is frequently performed is executed only while the updating processing is being performed by the host apparatus 3. The second individual write processing performs the comparing process when data is written to a block that refers to a common logical unit.

In addition, to reduce the load of the comparing process, for example, the disk access program 4221 of the storage apparatus 4 acquires the information about a swap area assigned to the host apparatus 3 from the host apparatus 3 in advance. Thus, the disk access program 4221 can move write data to the individual logical unit without performing the comparing process on the write data about the swap area, thereby reducing the frequency of the comparing process.

### (3-9) Common logical unit deleting processing

A common logical unit deleting processing is to delete a common logical unit of an old generation not referred to any more in the storage apparatus 4.

If a system administrator operates the master management apparatus 5 to issue a common logical unit delete instruction, the update management program 523 transmits a common logical unit delete request command to the logical unit management program 4222 through the management interface 426 of the storage apparatus 4. The common logical unit delete request command includes a group to which a common logical unit to be deleted belongs as a parameter. In this embodiment, it may be assumed that the common logical unit delete request command relates to "group: A".

When the logical unit management program 4222 receives a common logical unit delete request command, the logical unit management program 4222 acquires, with reference to the external logical unit management table 700, the internal logical unit number of the common logical unit belonging to the "group: A", i.e., a master, and designates the common logical unit data management table 1200 of the common logical unit. Then, the logical unit management program 4222 refers to the reference number column 1203 of the designated common logical unit data management table 1200 in order to determine whether or not the number of references is all 0. If the logical unit management program 4222 determines that the number of references is all 0, the internal logical unit about the common logical unit is deleted, and the internal logical unit block management table 1100, the common logical unit data management table 800, and the external logical unit block mapping table 900 are deleted. In addition, the logical unit management program 4222 deletes the entries of the common logical unit in the external logical unit management table 700 and the common logical unit management table 410-2.

In the data move processing in the first and second individual write processing and read processing, the reference block arrangement number is updated from a common logical unit of an old generation to a new logical unit. Therefore, the common logical unit of an old generation not referred to any more can be deleted by periodically executing the common logical unit deleting process.

### (4) Merits of this embodiment and other Embodiments

As described above, according to this embodiment, a common file of each host apparatus 3 is stored in a common logical unit to be shared among the host apparatuses 3. Therefore, the duplication of the data used by the host apparatuses can be avoided, and the specific data updated by the host apparatus 3 can be stored and held in an individual logical unit.

For example, when the host apparatus is a client computer, a storage area of several GB is normally required for a file/data relating to the OS and application program. Conventionally, as the OS and application program are repeatedly updated, backup files of old versions are normally stored, and the storage area expands largely. However, in this embodiment, the duplication of the storage area can be avoided, and the disk space can be effectively used.

The above-mentioned embodiment is only an example for explanation of the present invention, and the present invention is not limited to the above-mentioned embodiment. The present invention can be embodied in various modes without departing from the scope of the present invention. For example, in the above-mentioned embodiment, processes or steps by various programs is sequentially performed, but they can also be performed in other manners. Thus, unless inconsistency occurs in a result of the processing, the order of the steps can be exchanged or the processes can be concurrently performed.

Additionally, the present invention can be applied to a virtual computer system of a server computer implemented with a virtual mechanism.

When a virtual mechanism is used, a virtual disk is created on the local disk (auxiliary storage apparatus) of a server computer, and a boot image as a master is installed into the generated virtual disk, thereby activating a virtual master management apparatus 5 on the server computer. Afterwards, the system administrator operates the virtual master management apparatus 5 to perform the above-mentioned master creation processing.

The image creation program 522 installs the OS for a virtual server. The image creation program 522 transmits an external logical unit creation request command to the virtual server, and creates an external logical unit for storing the boot image of the virtual host apparatus in the storage apparatus 4. The image creation program 522 transmits a connection request command to the host interface 423 of the storage apparatus 4 using the storage connection function, and mounts a target external logical unit.

Then, the image creation program 522 formats the external logical unit, and creates a file for storing the boot image of the OS for the virtual server. The image creation program 522 copies the boot image to the file.

The virtual server creates a plurality of virtual disks in one external logical unit, and installs the boot image to the virtual disk. Since the boot image of the virtual disk is common to each of the host apparatus 3, the data is not stored in the individual logical unit, but stored in the common logical unit.

In the case of a virtual computer system, a virtual server mounts an external logical unit, and the virtual host apparatus performs only read/write processing on a virtual disk. A write request of a virtual host apparatus is reported to the disk access program 4221 of the storage apparatus 4 through a virtual server, and the individual write processing can be performed. Likewise, the read processing can be performed.

Further, the present invention allows a heterogeneous computer system that contains the computer system of the above-discussed embodiment and a conventional system that does not consider elimination of redundant resources.

That is, the host apparatus that does not perform the elimination of the duplicate does not use a common logical unit, but uses only an individual logical unit. For example, a group using a common logical unit is set as "none", and a boot image of the host apparatus is generated. Therefore, "none" is set in the group column 703 of the external logical unit management table 700. The storage apparatus 4 performs control so that the referring process cannot be performed to a common logical unit when "group: none" is set.

The present invention can be widely applied to a storage apparatus connected to a host apparatus over a network.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A computer system comprising:
a plurality of host apparatuses configured to be connected to a network;
a storage apparatus configured to be connected to the network; and a master management apparatus configured to be connected to the network,
wherein the storage apparatus comprises:
an external logical unit at which each of the plurality of host apparatuses is targeted; and
an internal logical unit assigned to the external logical unit, the internal logical unit including a common logical unit for storing data configuring common files commonly used by the plurality of host apparatuses and an individual logical unit for storing data configuring individual files used by each of the plurality of host apparatuses, and
wherein the storage apparatus performs, upon receipt of a write request from at least one of the plurality of host apparatuses, data matching by comparing write data depending on the write request with data stored in the common logical unit at each management block unit, as a result of the data matching, stores a matching data block in the common logical unit, and stores a non-matching data block in the individual logical unit.

2. The computer system according to claim 1, wherein the master management apparatus performs control of data writing such that a common file contained in a boot image used by the plurality of host apparatuses is written to the common logical unit and an individual file contained in the boot image is written to the individual logical unit.

3. The computer system according to claim 1 or 2,
wherein the storage apparatus holds access control information indicating whether access to the external logical unit is valid or invalid, and
wherein, upon receipt of the write request to the external logical unit, the storage apparatus determines whether the access control information about the external logical unit is valid, and performs the data matching when the access control information about the external logical unit is valid.

4. The computer system according to claim 3, wherein, if the storage apparatus determines that the access control information about the external logical unit is invalid, the storage apparatus further determines if the internal logical unit assigned to the external logical unit is a common logical unit, and performs the data matching when the storage apparatus determines that the internal logical unit is a common logical unit.

5. The computer system according to claim 4, wherein the storage apparatus stores the write data depending on the write request in the individual logical unit if the storage apparatus determines that the internal logical unit is not a common logical unit.

6. The computer system according to claim 2, wherein the master management apparatus controls to newly create a common logical unit in the storage apparatus when the common file is updated.

7. The computer system according to claim 6, wherein the storage apparatus manages generations of newly-created common logical units in accordance with the update.

8. The computer system according to claim 7, wherein the storage apparatus performs, upon receipt of a read request from at least one of the plurality of host apparatuses, data matching by comparing read data depending on the read request with data stored in the common logical unit at each management block unit, if the common logical unit referred to by the read request has a plurality of generations and an old generations common logical unit has been referred to.

9. The computer system according to claim 8, wherein the storage apparatus performs control such that a common logical unit of a latest generation is referred to if the storage apparatus determines that the read data matches the data stored in the common logical unit, and the data stored in a common logical unit of an old generation is transferred to the common logical unit of the latest generation if the storage apparatus determines that the read data does not match the data stored in the common logical unit.

10. The computer system according to any one of claims 1 to 9,
wherein the storage apparatus holds the number of references to the common logical unit, and
wherein the storage apparatus deletes the common logical unit based on the number of references.

11. A method of controlling a storage apparatus operatively connected to a plurality of host apparatuses over a network, the method comprising:
creating, as a common logical unit, a first internal logical unit for storing data configuring common files commonly used by a plurality of host apparatuses;
creating, as a individual logical unit, a second internal logical unit for storing data configuring individual file used by each of the plurality of host apparatuses;
assigning the common logical unit and the individual logical unit to an external logical unit at which each of the plurality of host apparatuses is targeted;
receiving a write request from at least one of the plurality of host apparatuses;
performing data matching by comparing write data depending on the write request with the data stored in the common logical unit at a management block unit; and
storing a matching data block in the common logical unit, and storing a non-matching data block in the individual logical unit.

12. The control method according to claim 11, further comprising writing a common file contained in a boot image used by the plurality of host apparatuses in the common logical unit while writing an individual file contained in the boot image in the individual logical unit.

13. The control method according to claim 11 or 12,
wherein a master management apparatus operatively connected to the network transmits a common logical unit generation request to a storage, and
wherein, upon receipt of the common logical unit generation request, the storage apparatus newly creates a common logical unit, and assigns the newly-created generated common logical unit to the external logical unit.
